# DEMANDE DE BREVET EUROPEEN

(11) **EP 1 250 846 A1**
(43) Date de publication de la demande: **23.10.2002**
(21) Numéro de dépôt: 02362007.3
(22) Date de dépôt: 19.04.2002
(51) Int. Cl.: A23C 19/068

(54) **Procédé de fabrication d'un fromage à pâte persillée pressée et fromage ainsi obtenu**

(30) Priorité: 20.04.2001 FR 0105391
(71) Demandeur: Onetik -SA-, 64240 Hasparren (FR)
(72) Inventeur: Maurance, Xabier, 64600 Anglet (FR); Martin, Jean-Charles, 64480 Ustaritz (FR)
(74) Mandataire: Thébault, Jean-Louis

(57) **Abrégé**

- L'objet de l'invention est un procédé de fabrication d'un fromage à pâte persillée pressée, à base de lait de brebis comprenant les étapes successives suivantes : thermisation, maturation courte de l'ordre de quelques dizaines de minutes au cours de laquelle est mélangé au lait par brassage lent du pénicillium, empresurage de préférence par mise en contact d'enzymes appropriées avec le lait dans une cuve de volume important, coagulation rapide de l'ordre de quelques dizaines de minutes, décaillage à l'aide d'un instrument à maillage très fin en sorte d'obtenir des cubes ou analogues de caillé de quelques millimètres, brassage régulier et doux à température aux alentours de 30°C, moulage après un premier égouttage sur tapis, pressage léger pour régler l'ouverture du caillé, égouttage, salage, piquage, puis affinage final.
- Application à la fromagerie.

## Description

La présente invention se rapporte à la fabrication d'un fromage à pâte persillée pressée et plus précisément un fromage à base de lait de brebis.

Le but de l'invention est de proposer un nouveau type de fromage alliant les propriétés des fromages dits à pâte pressée et celles des fromages dits à pâte persillée.

A cet effet, l'invention a pour objet un procédé de fabrication d'un fromage à pâte persillée pressée, à base de lait de brebis, comprenant les étapes successives suivantes :
- thermisation,
- maturation courte de l'ordre de quelques dizaines de minutes au cours de laquelle est mélangé au lait par brassage lent du pénicillium,
- empresurage de préférence par mise en contact d'enzymes appropriées avec le lait dans une cuve de volume important,
- coagulation rapide de l'ordre de quelques dizaines de minutes,
- décaillage à l'aide d'un instrument à maillage très fin en sorte d'obtenir des cubes ou analogues de caillé de quelques millimètres,
- brassage régulier et doux à température aux alentours de 30°C,
- moulage après un premier égouttage sur tapis,
- pressage léger pour régler l'ouverture du caillé,
- égouttage, salage, piquage, puis affinage final.

Au cours de la première étape du procédé, le lait de brebis collecté est transféré depuis un tank à lait vers un échangeur à plaque où il subit, en continu, une pasteurisation conventionnelle durant quelques secondes à une température de l'ordre de 65°C.

Le lait est acheminé ensuite dans une cuve de maturation où il subit une fermentation lactique à une température supérieure à 30°C pendant une durée de préférence de 20 à 30 minutes, après introduction de pénicillium en poudre, le mélange étant soumis à un brassage lent à des fins d'homogénéisation. Le pénicillium est de préférence constitué d'un cocktail de moisissures internes du type pénicillium et comprend notamment du bleu.

L'empresurage est effectué de préférence en mettant en contact la présure avec une quantité importante de lait, de plusieurs milliers de litres, afin d'obtenir un caillé se développant sur une hauteur importante qui va ainsi se tasser sous son propre poids et contribuer à conférer au produit final ses propriétés particulières.

Au cours de l'étape de coagulation, qui dure de préférence entre 20 et 25 minutes, se forme le caillé sous l'action des ferments et de la présure.

Le décaillage est réalisé par exemple à l'aide d'un tranche-caillé à grille fine de façon à obtenir des grains de taille voisine de celle de grains de maïs.

Dans la phase de brassage, on procède à une agitation régulière et ménagée des grains de caillé pour accélérer l'exsudation du sérum, au cours de laquelle des grains se réagglomèrent, le caillé étant maintenu à une température de l'ordre de 30°C.

Les grains de caillé sont ensuite transférés sur un tapis de convoyage, où ils subissent un premier égouttage au travers du tapis et en sortie duquel ils sont versés dans un moule ouvert, rempli puis coiffé à l'aide d'une presse à bande exerçant un semi-pressage ou pressage léger sur le caillé en sorte de régler de manière appropriée l'ouverture du caillé, ce semi-pressage s'exerçant durant environ 1 heure. Le caillé subit pendant cette opération un égouttage dans une ambiance à une température de l'ordre de 25°C et au cours de laquelle s'établissent l'humidité et l'acidité de la pâte. Le moule au cours de l'égouttage est avantageusement retourné pour homogénéiser le taux d'humidité dans la pâte.

Le fromage est ensuite démoulé pour subir un salage, de préférence par saumurage à l'aide d'une saumure faiblement salée, puis est transpercé de part en part par un jeu de fines aiguilles dont l'espacement est faible, de préférence une seule fois.

Enfin, le fromage est l'objet d'un affinage avant conditionnement pour sa commercialisation, au cours duquel on opère un ressuyage par séchage à l'air sec, ainsi que les soins habituels de retournement, brossage, etc....

Avantageusement, au cours de l'affinage, le fromage est revêtu d'une pellicule d'agents microbiens appropriés sélectionnés constituant une flore complexe contribuant à la constitution d'une croûte sèche d'épaisseur contrôlée et de bel aspect.

Les opérations d'affinage se déroulent sur une période de 2 à 3 mois.

Le fromage obtenu conformément au procédé de l'invention présente des propriétés organoleptiques remarquables et spécifiques qui le distinguent de manière notable et avantageuse à la fois des fromages traditionnels à pâtes persillées qui sont des fromages à pâtes molles et des fromages traditionnels à pâtes pressées.

Au plan de l'aspect visuel, le fromage selon l'invention présente extérieurement une croûte sèche d'épaisseur relativement réduite de l'ordre par exemple de 2 à 3 millimètres et intérieurement se caractérise par une pâte persillée de couleur crème comportant des ouvertures homogènes sous forme de micro-persillages sans cavernes, avec un peu de bleu, répartis de manière sensiblement homogène dans toute la masse de la pâte.

Au plan de la texture, la pâte est très légèrement souple et onctueuse sans être crémeuse ni lisse, et inclue quelques granulosités éparses.

En bouche, la pâte développe des goûts puissants, légèrement fruités et longs en bouche.

Enfin, l'invention n'est évidemment pas limitée aux modes de mise en oeuvre exposés ci-dessus, mais en couvre au contraire toutes les variantes notamment en ce qui concerne les divers paramètres (températures, durées, pression, etc...), le choix des divers ingrédients, ainsi que les moyens techniques utilisés pour réaliser les fonctions de brassage, décaillage, pressage, etc....

## Revendications

1. Procédé de fabrication d'un fromage à pâte persillée pressée, à base de lait de brebis comprenant les étapes successives suivantes :
- thermisation,
- maturation courte de l'ordre de quelques dizaines de minutes au cours de laquelle est mélangé au lait par brassage lent du pénicillium,
- empresurage de préférence par mise en contact d'enzymes appropriées avec le lait dans une cuve de volume important,
- coagulation rapide de l'ordre de quelques dizaines de minutes,
- décaillage à l'aide d'un instrument à maillage très fin en sorte d'obtenir des cubes ou analogues de caillé de quelques millimètres,
- brassage régulier et doux à température aux alentours de 30°C,
- moulage après un premier égouttage sur tapis,
- pressage léger pour régler l'ouverture du caillé,
- égouttage, salage, piquage, puis affinage final.

2. Procédé suivant la revendication 1, **caractérisé en ce que** l'étape de maturation courte est effectuée à une température supérieure à 30°C et pendant une durée comprise entre 20 et 30 minutes.

3. Procédé suivant la revendication 1 ou 2, **caractérisé en ce que** le pénicillium est constitué d'un mélange incluant notamment du bleu.

4. Procédé suivant l'une des revendications 1 à 3, **caractérisé en ce que** l'étape d'empresurage est effectuée en mettant en contact la présure avec une quantité importante de lait, de plusieurs milliers de litres, afin d'obtenir un caillé se développant sur une hauteur importante.

5. Procédé suivant l'une des revendications 1 à 4, **caractérisé en ce que** l'étape de coagulation rapide est effectuée durant 20 à 25 minutes.

6. Procédé suivant l'une des revendications 1 à 5, **caractérisé en ce que** les étapes de moulage-pressage sont réalisées par remplissage complet d'un moule et coiffage de ce dernier à l'aide d'une presse à bande pendant une durée de l'ordre de 1 heure, à une température de l'ordre de 25°C.

7. Procédé suivant l'une des revendications 1 à 6, **caractérisé en ce que** le salage est effectué par saumurage à l'aide d'une saumure faiblement salée.

8. Procédé suivant l'une des revendications 1 à 7, **caractérisé en ce que** l'étape de piquage consiste à transpercer de part en part et une seule fois le fromage à l'aide d'un jeu de fines aiguilles faiblement espacées.

9. Procédé suivant l'une des revendications 1 à 8, **caractérisé en ce que** l'étape d'affinage comporte un revêtement du fromage d'une pellicule d'agents microbiens appropriés sélectionnés en vue notamment de la constitution d'une croûte sèche d'épaisseur contrôlée.

10. Fromage obtenu conformément au procédé selon l'une quelconque des revendications 1 à 9.
